# EUROPEAN PATENT SPECIFICATION

(11) **EP 1 468 866 B1**
(45) Date of publication and mention of the grant of the patent: **03.09.2008**
(21) Application number: 04425225.2
(22) Date of filing: 30.03.2004
(51) Int. Cl.: B60M 1/24

(54) **Full traction coupling sleeve for railways contact wires**
Kupplungshülse fur Fahrleitungen mit voller Zugfestigkeit
Gouttiere de couplage a traction complete pour conducteurs de contact ferroviaires

(30) Priority: 11.04.2003 IT BS20030039
(43) Date of publication of application: 20.10.2004
(73) Proprietor: Bonomi Eugenio S.p.A., 25018 Montichiari (Brescia) (IT)
(72) Inventor: Bonomi, Uberto, 25065 Lumezzane (BS) (IT)
(74) Representative: Crippa, Paolo Ernesto

(56) References cited:
- FR-A- 893 572
- FR-E- 53 336

## Description

The present invention relates to the railway sector and refers to a full traction coupling sleeve for contact wires.

The use of clamps for the coupling of two contact wires of railway line catenaries is already known. These clamps must be able to withstand elevated traction loads, and at the same time allow the passage of the train sliding block on the contact wires. For this purpose, suitably shaped clamps are used to partially wrap the adjoining ends of the two contact wires to be connected, leaving part of these wires free for sliding of the sliding block. Locking of the clamp onto the ends of the wires is carried out using a certain number of clamping screws arranged radially in relation to the longitudinal axis of the clamp, and distributed along the whole of its length. Each screw must be screwed using a dynamometric key until a pre-set torque is reached, which guarantees resistance to a maximum traction load imposed by the sector regulations.

However, during use, the screws tend to loosen, which can compromise the safety of the joint, and consequently also the catenary, therefore periodic maintenance is needed to restore the value of the initial tightening torque.

Furthermore, it must be pointed out how the presence of the numerous clamping screws makes a significant impact on the overall weight of the joint clamp.

Document FR 893572 A discloses a device for coupling the ends of two parts of a contact wire, comprising a U-shaped metal sleeve which, after being mounted in place, is deformed in such a way to be anchored to said parts of the contact wire.

Document FR 53336 E shows a similar coupling device, which is further secured to the contact wire by means of a plurality of rivets distributed along the length of the sleeve.

Starting from these premises, the object of the present invention is to resolve the problems of the prior art referred to above and propose a device for coupling contact wires, which allows locking to the wires in a simpler, quicker and safer manner, guaranteeing constant resistance to traction loads over time.

Another object of the invention is to provide a coupling sleeve, which has a simpler structure and is much lighter compared with the clamps that are currently used, even though these are fully able to satisfy the requirements for resistance of traction loads imposed by the sector regulations.

These objects are achieved by means of a coupling sleeve, which is axially constrained to the contact wires by its radial compression; this is obtained by making a plurality of permanent deformations on the sleeve as described in claim 1.

Additional features and advantages of the coupling sleeve according to the present invention will result from the description reported below of one of its preferred examples of embodiment, with reference to the accompanying drawings, which are indicative and not limiting, wherein:

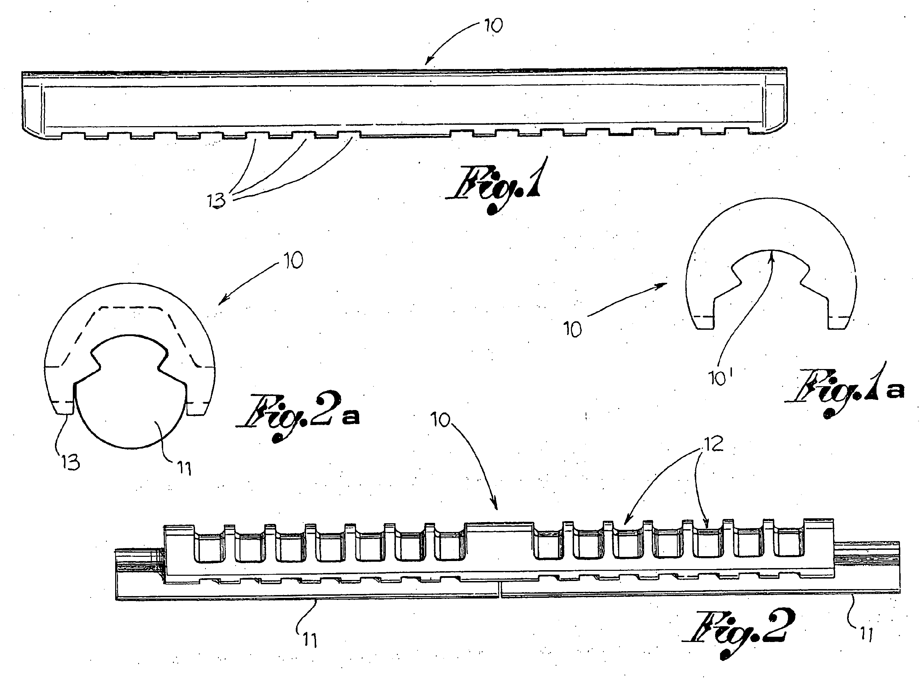

figures 1 and 1a show a side and front view, respectively, of a coupling sleeve according to the invention before coupling to the contact wires;

figures 2 and 2a show a side and front view, respectively, of the coupling sleeve applied to the ends of the two contact wires; and

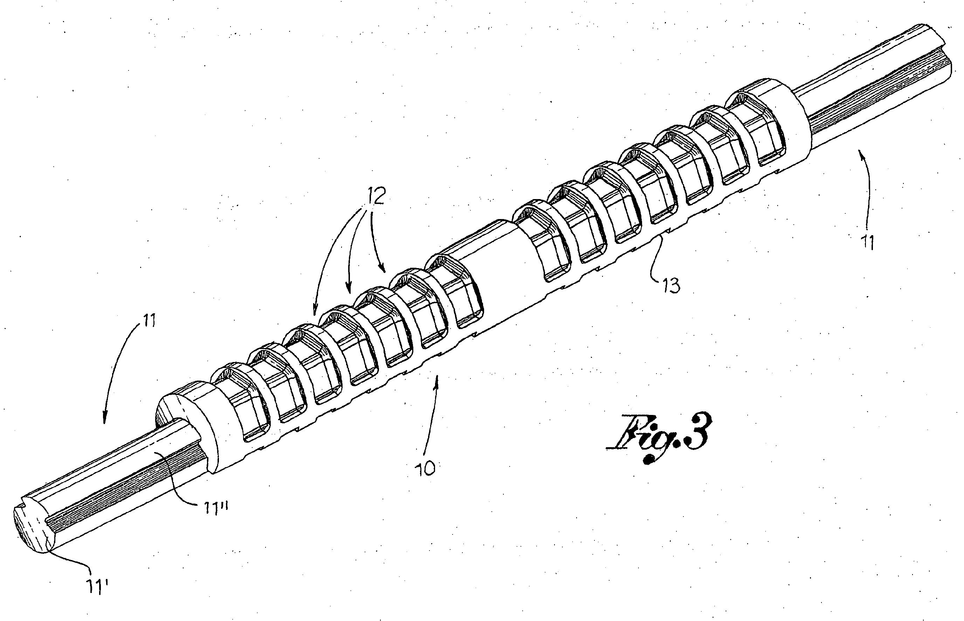

figures 3 shows a perspective view of the sleeve and contact wires.

The coupling sleeve 10 proposed herein is intended for in line connection of two contact wires 11 of a railway line. The sleeve 10 presents a basically C section for partial wrapping of the adjoining ends of the wires 11, leaving a part free, which is needed to allow the train sliding block to slide.

Inside, the profile 10' of the sleeve 10 is complementary to that of the contact wires 11.

In the example illustrated herein, the section of said wires 11 comprises a semi-circular part 11' that is facing and engaging in the internal profile 10' of the sleeve 10.

According to the invention, once the two adjoining ends of the wires 11 have been inserted into the coupling sleeve, the sleeve is locked onto the ends by compression making a series of permanent radial deformations 12 on the sleeve 10. These deformations 12, which are suitably spaced out between each other, are distributed along the whole body of the sleeve. Each of these deformations concerns a basically semi-circular part of the sleeve 10 opposite the free semi-circular part 11' of the contact wires 11, and comprises a throat, the bottom of which has a section corresponding to three consecutive sides of a hexagon.

In order to make these radial deformations 12 it is possible to use a matrix - not represented - that is suitably shaped and mounted onto an oleodynamic tool with a pressure regulator, which automatically determines the depth of the deformations to make the locking of the sleeve onto the contact wires conform to the existing regulations.

To facilitate the operator's task, in the sleeve 10 it is possible to make notches for reference 13 in which the matrix is engaged to make the radial deformations. Using the tool for the previously calibrated compression makes the tightening operations repeatable, quick and safe to carry out. Any risk of operator error when working the required, necessary tightening torque is, in fact, eliminated.

Lastly, the proposed coupling sleeve is extremely compact and light, since it does not have screws or any other reported tightening devices.

## Claims

1. Full traction coupling sleeve (10) for railways contact wires (11), where the sleeve is partially wrapped around the adjoining ends of said wires (11) to allow the passage of the train sliding block on the free part of the ends, wherein the sleeve (10) is constrained axially to said adjoining ends of the contact wires (11) by its radial compression, and wherein the sleeve (10) presents a plurality of radial deformations (12) that are suitably spaced out, and distributed along most of its length, **characterised in that** each radial deformation comprises a throat comprising a bottom part with a section corresponding to three consecutive sides of a hexagon in such a way to concern a substantially semi-circular part of the surface of the sleeve opposite the free part of the ends of the contact wires.

2. Coupling sleeve according to claim 1
wherein the section of the sleeve has a C form with an internal profile (10') that is complementary to that of the part of the contact wires around which it is wrapped.

3. Coupling sleeve according to claim 2 , wherein said internal profile (10') is defined by a basically dovetailed longitudinal groove.

4. Coupling sleeve according to any one of the previous claims, comprising a plurality of notches for reference (13) to facilitate the radial deformations.

5. Method for full-traction coupling of two contact wires (11) for railways, consisting of an insertion of the adjoining ends of said wires into a coupling sleeve (10) with a C section and of a radial compression of the sleeve on said wire ends, wherein said compression is obtained by making a plurality of permanent radial deformations (12) on the sleeve, which are suitably spaced in the direction of the length of the sleeve, **characterised in that** said radial deformations are made so as to create a form with three adjoining hexagon sides.

6. Method according to claim 5, wherein the radial compression is obtained with a tool, and wherein before said compression is made, the tool is positioned on the sleeve using at least one notch (13) for reference, which is made in said sleeve.

## Patentansprüche

1. Kupplungshülse (10) mit voller Zugfestigkeit für Fahrleitungen (11), wobei die Hülse teilweise die aneinanderstoßenden Enden der genannten Leitungen (11) umhüllt, um das Passieren des Schleifstücks des Zugs am freien Teil der Enden zu gestatten, wobei die Hülse (10) durch radiales Zusammenpressen axial an den genannten aneinanderstoßenden Enden der Fahrleitungen (11) befestigt ist, und wobei die Hülse (10) eine Mehrzahl von radialen Verformungen (12) aufweist, die in geeigneter Weise voneinander beabstandet und entlang des größten Teils der Hülsenlänge verteilt sind, **dadurch gekennzeichnet, dass** jede radiale Verformung eine Kehle umfasst, die einen Bodenteil mit einem Querschnitt aufweist, der drei aufeinanderfolgenden Seiten eines Sechsecks entspricht, dergestalt, dass ein im wesentlichen halbkreisförmiger Teil der Hülsenoberfläche betroffen ist, die dem freien Teil der Enden der Fahrleitungen entgegengesetzt ist.

2. Kupplungshülse nach Anspruch 1, wobei der Querschnitt der Hülse C-förmig ist mit einem Innenprofil (10'), das komplementär zu jenem des Teils der Fahrleitungen ist, den die Hülse umhüllt.

3. Kupplungshülse nach Anspruch 2, wobei das genannte Innenprofil (10') durch eine im Wesentlichen schwalbenschwanzförmige Längsnut definiert ist.

4. Kupplungshülse nach einem der vorhergehenden Ansprüche, umfassend eine Mehrzahl von Referenzkerben (13), um die radialen Verformungen zu erleichtern.

5. Verfahren zum Verbinden von zwei Fahrleitungen (11) unter Bewahrung der vollen Zugfestigkeit, bestehend aus dem Einführen von aneinanderstoßenden Enden der genannten Leitungen in eine Kupplungshülse (10) mit einem C-förmigen Querschnitt, und aus einem radialen Zusammenpressen der Hülse auf die genannten Leitungsenden, wobei das genannte Zusammenpressen erzielt wird, indem eine Mehrzahl von permanenten radialen Verformungen (12) auf der Hülse erzeugt wird, die in geeigneter Weise in Längsrichtung der Hülse beabstandet sind, **dadurch gekennzeichnet, dass** die genannten radialen Verformungen so ausgeführt werden, dass eine Form mit drei aneinanderstoßenden Sechseckseiten geschaffen wird.

6. Verfahren nach Anspruch 5, wobei das radiale Zusammenpressen mit einem Werkzeug erfolgt und wobei, vor Ausführung des genannten Zusammenpressens, das Werkzeug auf der Hülse positioniert wird, wobei zumindest eine Kerbe (13), die auf der genannten Hülse vorgesehen ist, als Bezugspunkt verwendet wird.

## Revendications

1. Boite de jonction (10) à traction totale pour conducteurs de contact (11) ferroviaires, dans laquelle la boite est partiellement enroulée autour des extrémités adjacentes desdits conducteurs (11) afin de permettre le passage du coulisseau de train sur la partie libre des extrémités, dans laquelle la boite (10) est contrainte axialement sur lesdites extrémités adjacentes des conducteurs de contact (11) par sa compression radiale, et dans laquelle la boite (10) présente une pluralité de déformations radiales (12) qui sont espacées de manière appropriée, et réparties suivant la plupart de sa longueur, **caractérisée en ce que** chaque déformation radiale comporte une gorge comportant une partie inférieure avec une section correspondant à trois côtés consécutifs d'un hexagone, de manière à concerner une partie sensiblement semi-circulaire de la surface de la boite opposée à la partie libre des extrémités des conducteurs de contact.

2. Boite de jonction selon la revendication 1, dans laquelle la section de la boite présente une forme en C avec un profil interne (10') qui est complémentaire à celui de la partie des conducteurs de contact autour desquels elle est enroulée.

3. Boite de jonction selon la revendication 2, dans laquelle ledit profil interne (10') est défini par une rainure longitudinale principalement en queue d'aronde.

4. Boite de jonction selon l'une quelconque des revendications précédentes, comportant une pluralité d'encoches de référence (13) permettant de faciliter les déformations radiales.

5. Procédé de jonction à traction totale de deux conducteurs de contact (11) pour les chemins de fer, consistant à insérer les extrémités adjacentes desdits conducteurs dans une boite de jonction (10) avec une section en C et à assurer une compression radiale de la boite sur lesdites extrémités de conducteur, dans lequel ladite compression est obtenue en réalisant une pluralité de déformations radiales permanentes (12) sur la boite, qui sont espacées de manière appropriée dans la direction longitudinale de la boite, **caractérisé en ce que** lesdites déformations radiales sont réalisées de manière à créer une forme avec trois côtés d'hexagone adjacents.

6. Procédé selon la revendication 5, dans lequel la compression radiale est obtenue avec un outil, et dans lequel, avant que ladite compression ne soit réalisée, l'outil est positionné sur la boite en utilisant au moins une encoche de référence (13), qui est réalisée sur ladite boite.
